# FASCICULE DE BREVET EUROPEEN

(11) **EP 3 748 608 B1**
(45) Date de publication et mention de la délivrance du brevet: **14.05.2025**
(21) Numéro de dépôt: 20177376.9
(22) Date de dépôt: 29.05.2020
(51) Int. Cl.: G09B 21/00

(54) **DISPOSITIF DE LECTURE TACTILE POUR L IDENTIFICATION DES COULEURS**
VORRICHTUNG ZUM TAKTILEN LESEN ZUR FARBERKENNUNG
TOUCH READING DEVICE FOR IDENTIFYING COLOURS

(30) Priorité: 04.06.2019 CH 7152019
(43) Date de publication de la demande: 09.12.2020
(73) Titulaire: Balmelli, Chantal, 2063 Saules (CH)
(72) Inventeur: Balmelli, Chantal, 2063 Saules (CH)
(74) Mandataire: P&TS SA (AG, Ltd.)

(56) Documents cités:
- WO-A1-2013/137757
- WO-A1-2017/144924
- WO-A1-2019/009694
- US-A- 3 718 991
- US-A- 4 650 421
- US-A1- 2013 139 952

## Description

### Domaine technique

La présente invention concerne un dispositif destiné aux malvoyants et aux aveugles, pour leur permettre d'identifier par le toucher la couleur d'un objet.

### Etat de la technique

Les aveugles et malvoyants ont accès à la lecture grâce notamment au formalisme de Louis Braille. Cependant, selon ce formalisme, les couleurs doivent être écrites en toutes lettres pour être reconnues, ce qui peut être fastidieux.

Des méthodes basées sur des formes géométriques ont déjà été développées.

Le brevet JP 50826117, par exemple, propose d'associer une forme géométrique simple à une couleur donnée et de disposer une ou plusieurs de ces formes géométriques au sein d'un carré, ayant en son centre un point de référence. Des combinaisons de couleurs peuvent y être représentées où la proportion des couleurs entre elles est déterminée par le nombre de figures géométriques correspondantes au sein du carré. Le nombre de figures géométriques est de maximum 4, ce qui limite les combinaisons possibles. En outre, les nuances de clarté ne peuvent être matérialisées. La demande de brevet WO9703427 adopte un code couleur similaire où les formes géométriques peuvent en outre être combinées.

La demande de brevet WO13137757 propose un autre formalisme, où les formes géométriques de base sont combinées de manière à produire des formes hybrides, représentatives du mélange de couleurs. Cependant, les formes géométriques ne sont associées que deux à deux, ce qui limite la variété de couleurs accessibles.

La demande de brevet US2013139952 propose un code couleur tactile basé sur des formes évocatrices telles que des vagues ou la peau d'orange. Dans ce cas, le nombre de couleurs accessibles se limite au nombre de représentations évocatrices.

Les méthodes basées sur des formes géométriques ou des formes symboliques obligent à identifier le contour de chacune de ces formes, ce qui est d'autant plus fastidieux qu'elles sont nombreuses et complexes.

Des méthodes basées sur des points saillants ont été proposées. C'est le cas notamment de la demande WO19009694, qui permet d'identifier la couleur de carreaux de mosaïque par un ou plusieurs points en relief sur la surface du carreau de mosaïque. Dans ce cas, les couleurs restent limitées à quelques combinaisons de points. En outre, cette représentation ne permet pas de matérialiser les nuances de couleurs ou les niveaux de clarté.
Il y a donc matière à améliorer la représentation des couleurs, notamment dans leur diversité et dans leurs nuances, tout en s'affranchissant des formes géométriques.

### Bref résumé de l'invention

La présente demande concerne un dispositif tactile pour la représentation d'une couleur tel que défini dans la revendication indépendante 1.

Le but de la présente invention est de proposer un dispositif tactile à destination des aveugles et des malvoyants, qui soit exempt des limitations évoquées ci-dessus. En particulier, la présente invention propose de représenter une gamme étendue de couleurs de manière simple et sans formes géométriques ou évocatrices, qui peuvent être trop complexes à identifier au toucher.

Un autre objectif de l'invention est de proposer un moyen de production du dispositif tactile.

Selon l'invention, ce but est atteint, notamment au moyen du dispositif tactile décrit ci-après.

Cette solution présente notamment l'avantage par rapport à l'art antérieur de pouvoir représenter simplement une large palette de couleurs, ainsi que leurs nuances.

### Brève description des figures

Des exemples de mise en œuvre de l'invention sont indiqués dans la description illustrée par les figures annexées :
- Figure 1A : Rouge
- Figure 1 B : Bleu
- Figure 1C : Jaune
- Figure 2A : Vert
- Figure 2B : Orange
- Figure 2C : Violet
- Figure 3A : Blanc
- Figure 3B : Noir
- Figure 4A : Rouge-violet
- Figure 4B : Rouge-orangé
- Figure 4C : Bleu-vert
- Figure 4D : Bleu-violet
- Figure 4E : Jaune-orangé
- Figure 4F : Jaune-vert
- Figure 5A : Gris clair
- Figure 5B : Gris très clair
- Figure 5C : Gris foncé
- Figure 5D : Gris très foncé
- Figure 6A : Jaune-vert tirant plus sur le vert
- Figure 7A : Rose clair
- Figure 7B : Rose très clair
- Figure 7C : Rose foncé
- Figure 7D : Rose très foncé
- Figure 8A : Marron clair
- Figure 8B : Marron très clair
- Figure 8C : Marron foncé
- Figure 8D : Marron très foncé
- Figure 9A : Vert pomme
- Figure 9B : Vert tendre
- Figure 9C : Vert bouteille
- Figure 9D : Vert feuille tendre
- Figure 10A : Points de teinte
- Figure 10B : rouge-violet tirant sur le violet
- Figure 11A : bleu dégradé horizontal
- Figure 11B : bleu dégradé vertical
- Figure 12 : exemple de représentation agrandie

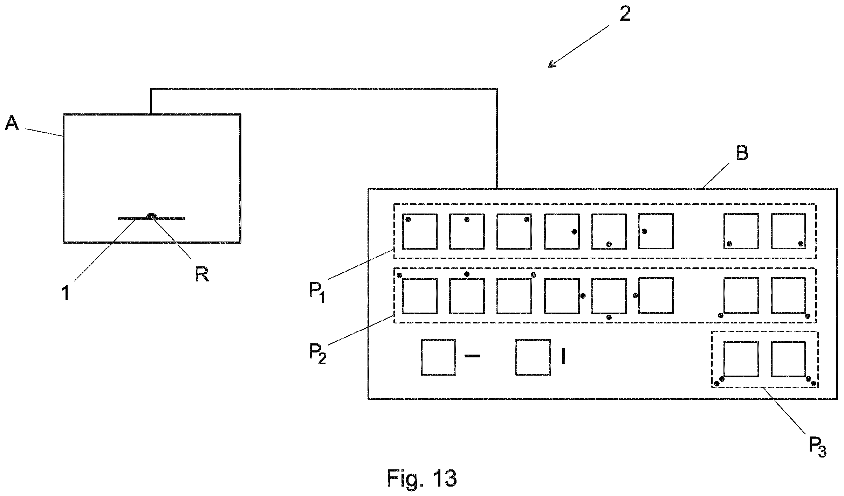

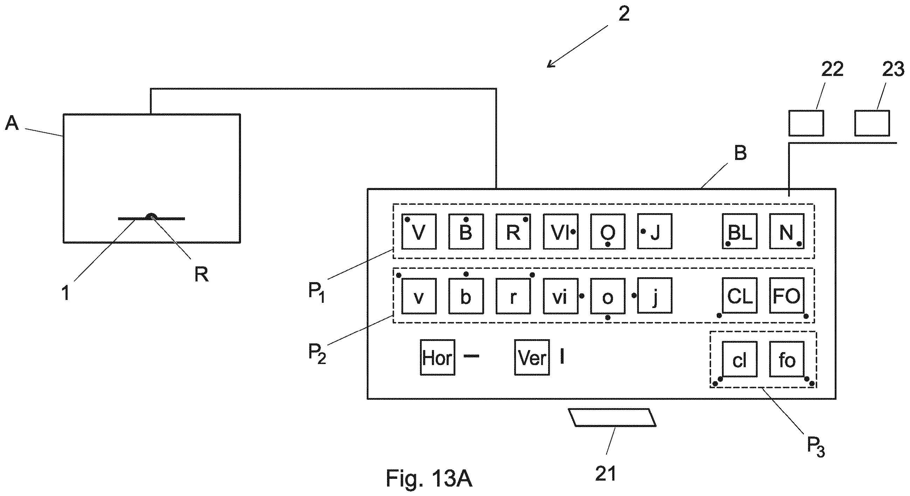

- Figure 13 : vue schématique d'un dispositif d'impression pour la production du dispositif tactile 1.
- Figure 13A : Vue schématique d'un dispositif d'impression pour la production du dispositif tactile 1 selon un autre mode de réalisation,
- Figure 14 : vue schématique de face et de profile de la première plaque de poinçonnage,

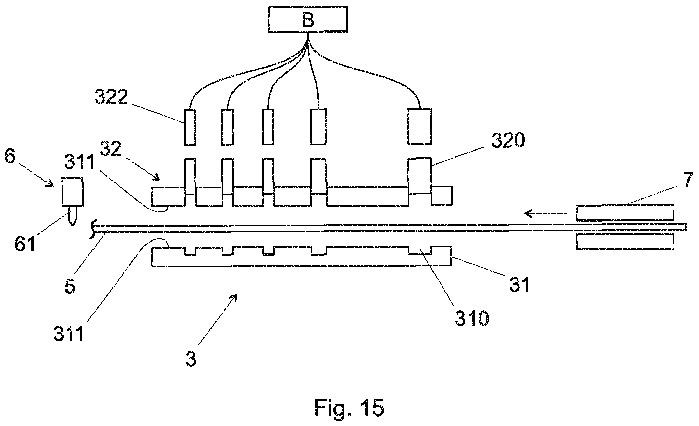

- Figure 15 : Vue schématique d'un ensemble comprenant un dispositif de mise en relief, un dispositif d'entrainement pas à pas et un système de découpe.
- Figure 16 : exemple de dispositif d'impression

### Exemple(s) de mode de réalisation de l'invention

Le dispositif tactile **1** comporte une première zone tactile **Z1** où les couleurs sont représentées par un ensemble d'au moins deux points de lecture en relief. La nature de la couleur est matérialisée par la position de ces au moins deux points de lecture l'un par rapport aux autres. L'un des au moins deux points de lecture est un point de référence **R.** Il est de taille plus importante de sorte que le lecteur puisse l'identifier facilement. Le ou les autres points de lecture sont des points de couleur **C.** Ils sont de taille plus petite que le point de référence **R.** De leur position par rapport au point de référence **R** découle la nature de la couleur. La position des points de couleurs **C** par rapport au point de référence **R** peut être définie par rapport aux points cardinaux usuels nord, sud, est, ouest, ainsi que leurs directions intermédiaires nord-est, nord-ouest, sud-est, sud-ouest. Chaque point de couleur **C** peut alors prendre l'une de ces huit positions par rapport au point de référence **R.**

Le dispositif tactile **1** comporte un signe tactile d'orientation **F,** permettant d'orienter le dispositif tactile 1 de manière adéquate pour déterminer la position cardinale des points de couleur C par rapport au point de référence R. Le signe d'orientation F est de préférence différent des points tactiles utilisés pour définir les couleurs. Le signe d'orientation peut être par exemple un trait ou tout autre objet tactile différent des points et identifiable comme signe d'orientation. Il est disposé de préférence dans la direction cardinale sud par rapport au point de référence R et plus éloigné du point de référence R que le dernier point présent dans la direction cardinale sud.

Les trois couleurs primaires, définies par le rouge, le jaune et le bleu, comportent chacune un point de couleur C et le point de référence R. Les trois couleurs secondaires, définies par le vert, le orange et le violet, comportent chacune un point de couleur C et le point de référence R. Les couleurs noir et blanc sont également définie par un point de couleur C et le point de référence R. Chacun des points de couleurs C des couleurs primaire, secondaire, noir et blanc occupe spécifiquement l'une des huit positions cardinales définies plus haut.

A titre d'exemple, le tableau ci-dessous résume la position cardinale des points de couleurs C par rapport au point de référence R :

| **Couleur** | **Position cardinale** |
|---|---|
| Rouge | Nord-Est |
| Bleu | Nord |
| jaune | Ouest |
| vert | Nord-Ouest |
| orange | Sud |
| violet | Est |
| noir | Sud-Est |
| blanc | Sud-Ouest |

D'autres positions peuvent bien sûr être attribuées aux couleurs.

Les points de couleurs **C** peuvent être répartis à égale distance du point de référence **R,** quelle que soit leur position cardinale. Dans ce cas, l'ensemble des huit positions des points de couleurs **C** forme un cercle dont le point de référence **R** est le centre.

Alternativement, les points de couleurs **C** peuvent être répartis dans une grille formées par 3 colonnes de même largeur et 3 lignes de même hauteur, où la largeur des colonnes correspond à la hauteur des lignes, définissant ainsi 9 positions, dont la position centrale est celle du point de référence **R.** Dans ce cas les points de couleurs **C** disposés sur les axes cardinaux principaux nord **N,** sud **S,** est **E** et ouest **W,** sont à une certaine distance du point de référence **R** et les autres points de couleurs **C** qui sont disposés dans les directions intermédiaires nord-est **NE,** nord-ouest **NW,** sud-est **SE** et sud-ouest **SW,** sont à une distance plus grande du point de référence **R.** Dans ce cas, l'ensemble des huit positions forme un carré dont le point de référence **R** est le centre.

Selon un autre mode de réalisation, les points de couleurs **C** peuvent être répartis dans une grille formée par 3 colonnes de même largeur et 3 lignes de même hauteur, où la largeur des colonnes diffère de la hauteur des lignes. Les points de couleurs **C** s'inscrivent alors dans un rectangle avec pour résultat des distances par rapport au point de référence **R** plus variées. En particulier, les points de couleur **C** situés dans les directions nord **N** et sud S seront à une distance donnée du point de référence **R,** les points de couleur **C** disposés dans les directions est E et ouest **W** seront à une autre distance du point de référence **R** et les quatre points de couleur **C** disposés dans les directions intermédiaires nord-est **NE,** nord-ouest **NW,** sud-est **SE** et sud-ouest **SW** seront à une troisième distance du point de référence **R.**

Dans le cas où les points de couleurs **C** sont répartis dans un carré ou dans un rectangle, en plus de la direction cardinale par rapport au point de référence, ils peuvent être identifiés, au moins partiellement, par leur distance par rapport au point de référence **R.**

La première zone tactile **Z1** est définie par la surface du dispositif tactile **1,** le point de référence **R** et par l'espace matérialisé par l'ensemble des points de couleur **C.** Optionnellement, le signe d'orientation **F** peut faire partie de la première zone tactile **Z1.** En fonction de la disposition retenue pour les points de couleurs **C,** la première zone tactile **Z1** peut prendre la forme d'un disque, d'un carré ou d'un rectangle. D'autres dispositions peuvent être envisagées pour autant que les couleurs soient caractérisées au-moins par la direction cardinale de leur point de couleur **C** par rapport au point de référence **R.**

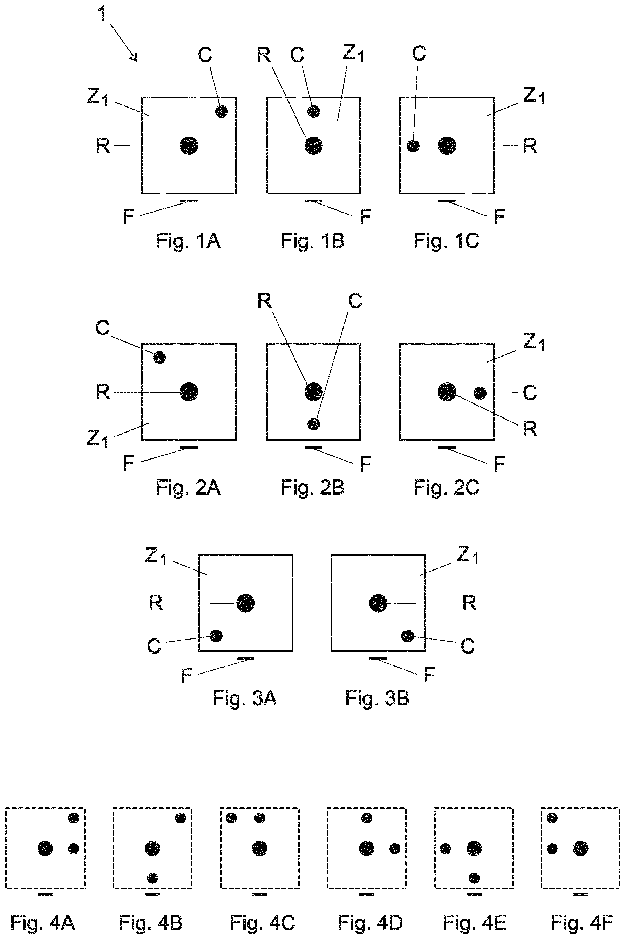

Les trois couleurs primaires, les trois couleurs secondaires et les couleurs noir et blanc, telles que définies plus haut, peuvent être combinées pour produire une couleur résultante. Il en est ainsi pour les couleurs tertiaires, résultant de la combinaison de deux couleurs parmi les huit mentionnées ci-dessus. Les six couleurs tertiaires sont ainsi définies par rouge-violet, rouge orangé, bleu-vert, bleu-violet, jaune orangé et jaune-vert, comme illustré par les figures 4A-4F. Les couleurs tertiaires peuvent servir de base pour d'autres combinaisons.

Dans le cadre de la présente description, la combinaison des couleurs désigne l'association de deux couleurs ou plus en quantités égales. Dans ces conditions, seul un point de référence **R** est matérialisé, et chacun des points de couleurs **C** est disposé selon sa position caractéristique.

Le dispositif de représentation des couleurs 1 comporte une seconde zone tactile **Z2,** périphérique à la première zone tactile **Z1.** La seconde zone tactile **Z2** est définie par la surface du dispositif tactile 1 et les points et signes en reliefs autres que ceux définissant la première zone tactile 1. Cette seconde zone tactile **Z2** permet de définir des nuances de clarté. Des points de teinte **T,** de taille plus petite que celle les points de couleur **C,** sont disposés selon les mêmes directions cardinales nord **N,** sud **S,** est **E** et ouest **W** et des directions intermédiaires nord-ouest **NE,** nord-est **NW,** sud-ouest **SW** et sud-est **SE,** à une distance du point de référence **R** plus important que celle des points de couleur **C.** Dans le cas où les points de couleurs **C** sont répartis selon un cercle, alors les points de teinte **T** sont répartis selon un autre cercle, concentrique au cercle défini par les points de couleur **C.** Pour une répartition des points de couleurs **C** en rectangle, les points de teinte **T** sont disposés selon un rectangle englobant celui des points de couleurs **C.** Lorsque les points de couleur **C** sont disposés en carré, alors les points de teinte **T** se répartissent suivant un carré plus grand.

La distance qui sépare les points de teinte T du point de référence **R** peut être égale à 1,5 fois la distance qui sépare un point de couleur **C** du point de référence **R,** sur une direction cardinale donnée. Alternativement elle peut être égale à deux fois ou deux fois et demie la distance qui sépare un point de couleur **C** du point de référence **R,** sur une direction cardinale donnée.

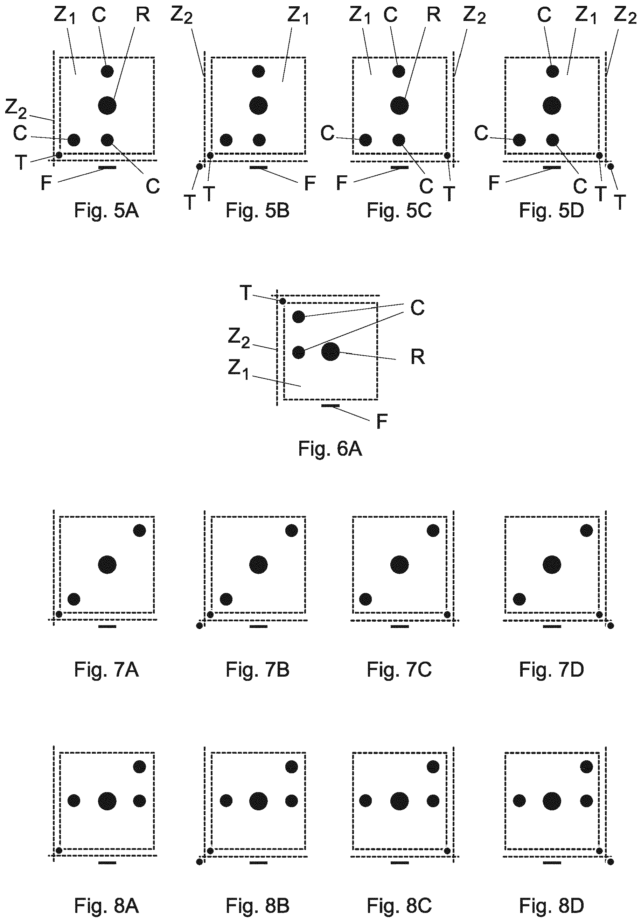

Les points de teinte **T,** permettent de déterminer les aspects plus ou moins clairs ou foncés d'une couleur définie par les points de couleur **C.** Les figures 5A, 5B, 5C et 5D en donne un exemple. Les teintes les plus claires sont matérialisées par un ou plusieurs points dans la direction sud-ouest, correspondant au point de couleur **C** blanc. Les teintes les plus foncées sont matérialisées par un ou plusieurs points dans la direction sud-est, correspondant au point de couleur **C** noir. Le degré de clarté dépend du nombre de points alignés selon une direction donnée. Quatre degrés de clarté sont illustrés par exemple dans les figures 5A à 5D, correspondant à « clair » et « très clair » ou « foncé » et « très foncé ». Plus de degré de clartés peuvent être matérialisés selon ce principe.

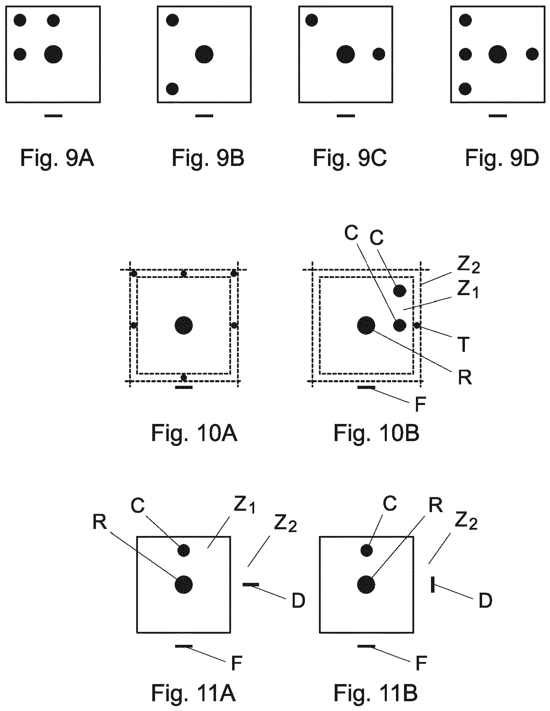

Les points de teinte **T** permettent en outre de moduler les tons dans le cas des mélanges de couleurs, matérialisés par les points **C,** comme montré dans la figure 10A. Les positions cardinales des points de teinte **T** sont les mêmes que celles des points de couleur **C** correspondante. Dans le cas d'un mélange comprenant du violet et du rouge, les deux points de couleur **C** correspondant à la combinaison du violet et du rouge sont disposés dans les directions est **E** et nord-est **NE.** Si la nuance du mélange est plus proche du violet, alors un point de teinte **T** est disposé dans la seconde zone tactile **Z2** dans la direction est **E,** correspondant au violet, comme illustré dans la figure 10B. Si au contraire le mélange est plus proche du rouge, alors un point de teinte **T** est disposé dans la direction nord-est **NE,** correspondant au rouge. Comme pour les degrés de clarté, plusieurs degrés de nuances peuvent ainsi être élaborés, comprenant « plus rouge » et « beaucoup plus rouge » ou « plus violet » et « beaucoup plus violet », le degré de teinte le plus prononcé étant matérialisé par un second point de teinte **T** aligné avec le premier point tactile **T** selon sa direction cardinale, dans la seconde zone tactile **Z1.**

Le même principe s'applique lorsque plus de deux couleurs sont combinées. Dans ce cas, des tons plus ou moins prononcés peuvent être représentés grâce à un ou plusieurs points de teinte **T.**

Les première **Z1** et seconde **Z2** zones tactiles du dispositif tactile **1** sont identifiables par les points de référence **R,** les points de couleurs **C,** et les éventuels points de teinte **T** et d'autres signes. La seconde zone tactile **Z2** peut être indétectable en l'absence de points de teinte **T** et d'autres signes éventuels. Optionnellement, il peut être prévu d'inclure au dispositif tactile 1 une séparation tactile entre les première **Z1** et seconde **Z2** zones tactiles. Une telle séparation pourrait être par exemple matérialisée par une ligne ou une strie marquée en creux sur la surface du dispositif tactile **1.** Alternativement, un bourrelet délimitant la première zone tactile Z1 peut être prévu, idéalement disposé autour de l'espace défini par l'ensemble des points de couleur **C.**

Le dispositif tactile 1 permet en outre de représenter les dégradés de couleur. La seconde zone tactile **Z2** peut comporter un signe **D** caractéristique d'un dégradé de couleur, disposé à une distance du point de référence **R** plus importante que les points de teinte T. Le signe **D** est de préférence facilement identifiable et différent des points utilisés pour les couleurs et les teintes. Le signe **D** peut être disposé dans une direction cardinale donnée, par exemple à l'est du point de référence **R** et orienté différemment s'il s'agit d'indiquer un dégradé horizontal ou un dégradé vertical. Alternativement, le signe **D** peut être disposé dans plusieurs directions cardinales de manière à indiquer le sens du dégradé de couleur. Pour un dégradé horizontal, il peut être placé dans la direction cardinale est **E** si le dégradé est vers la droite ou dans la direction ouest **W** si le dégradé est vers la gauche. Pour un dégradé vertical, il peut se disposer selon les directions nord **N** et sud **S** selon que le dégradé de couleur est vers le bas ou vers le haut. La taille du signe **D** peut en outre indiquer l'importance du dégradé de couleur. En particulier, le dégradé sera jugé d'autant plus important que le signe **D** est grand.

Le signe **D** peut être par exemple un trait horizontal pour représenter les dégradés de couleur horizontaux et vertical pour les dégradés de couleur verticaux, comme illustré au figures 11A et 11B. Il peut optionnellement être placé soit dans la direction cardinale est **E,** pour indiquer par exemple un dégradé vers la droite ou vers le haut, soit dans la direction cardinale ouest **W** pour indiquer un dégradé de couleur vers la gauche ou vers le bas. La longueur du trait peut être par exemple 1 fois, 1.5 fois ou 2 fois le diamètre du point de référence **R.** Alternativement, elle peut varier en fonction de l'importance du dégradé depuis 1 fois jusqu'à 2 ou 3 fois le diamètre du point de référence **R.** Le signe **D** relatif au dégradé de couleur est de préférence différent du signe d'orientation **F** dans ses dimensions, dans sa forme, ou à la fois dans ses dimensions et sa forme.

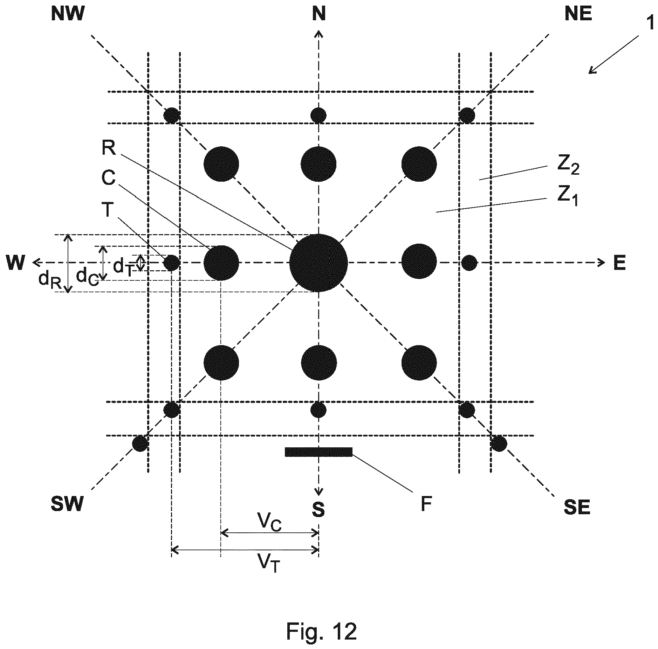

La surface du dispositif tactile 1 est adaptée pour être perçue et lue du bout du doigt. Les points de référence **R,** de couleur **C** et les éventuels points de teinte **T,** ainsi que les signes d'orientation **F** et de dégradés **D** sont disposés sur une surface de 1 à 5 cm², de préférence sur une surface de 1 à 3 cm². La figure 12 montre un exemple de réalisation du dispositif tactile 1 où les points de couleurs **C** sont disposés dans un ensemble de 3 lignes et 3 colonnes formant une position centrale et 8 positions cardinales. La hauteur des lignes est équivalente à la largeur des colonnes de sorte que les points de couleur **C** sont circonscrits dans un carré et délimitent la première zone tactile **Z1.** Le point de référence **R** est central et a un diamètre **dR** de 2 mm et a une épaisseur de 1 mm. Les points de couleurs **C** sont disposés selon les directions cardinales nord **N,** sud **S,** est **E** ouest **W** et les directions intermédiaires nord-est **NE,** nord-ouest **NW,** sud-est **SE** et sud-ouest **SW.** Ils ont un diamètre **dC** de 1mm, soit la moitié du diamètre **dR** du point de référence **R** et une épaisseur de 1 mm. La distance entre axes **VC** des points de couleur **C** disposés sur les directions cardinales nord **N,** sud **S,** est **E** et ouest **W** est de 3 mm. La position des points de couleur **C** disposés dans les directions intermédiaires nord-est **NE,** nord-ouest **NW,** sud-est **SE** et sud-ouest **SW** est alignée avec la position des points de couleur **C** disposés dans les directions cardinales nord **N,** sud **S,** est **E** et ouest **W** formant les lignes et colonnes du carré. Les points de teinte **T** sont disposés dans la seconde zone tactile **Z2** en périphérie de la première zone tactile **Z1,** dans les directions cardinales nord **N,** sud **S,** est **E** ouest **W** et les directions cardinales intermédiaires nord-est **NE,** nord-ouest **NW,** sud-est **SE** et sud-ouest **SW.** Leur diamètre **dT** est de 0.5 mm, soit la moitié du diamètre **dC** des points de couleur **C.** La distance entre axes **VT** des points de teinte T disposés sur les directions cardinales nord **N,** sud **S,** est **E** et ouest **W est** de 4.5 mm. La position des points de teinte **T** disposés dans les directions cardinales intermédiaires nord-est **NE,** nord-ouest **NW,** sud-est **SE** et sud-ouest **SW** est alignée avec la position des points de teinte **T** disposés dans les directions cardinales nord **N,** sud S, est E et ouest **W.** Le signe d'orientation **F** est un trait de longueur égale au diamètre **dR** du point de référence **R** et d'une épaisseur de 0.2 mm.

Pour les besoins de la présente description, le dégradé de couleur indique que l'intensité d'une couleur donnée décroit dans une direction donnée, rendant la couleur plus pâle. Un dégradé total conduit à une perte totale de la couleur considérée dans la direction considérée.

Selon la présente invention, les points en relief ne permettent pas, individuellement, de caractériser une couleur, contrairement aux figures géométriques ou symboliques. En ce sens, les points ne peuvent être considérés comme des figures géométriques, quel qu'en soit leur diamètre ou leur hauteur.

Le terme « tactile » désigne une surface non plane dont le relief est susceptible d'être ressenti et reconnu par le toucher. En particulier, les points et signes tactiles relatifs au point de couleur, de référence, de teinte, de dégradé et d'orientation, ont une hauteur de l'ordre de 0,5 mm à 2 mm et sont facilement perceptibles et reconnaissables par le bout du doigt. Bien qu'un relief saillant soit privilégié, les signes tactiles peuvent être alternativement concaves, c'est-à-dire inscrits en creux par rapport à la surface du dispositif tactile **1.** Un mélange de signes saillants et concaves est également possible. Le point de référence R peut par exemple être saillant et les points de couleur **C** ou les points de teinte **T** peuvent être concaves.

Le dispositif tactile **1** peut prendre la forme d'un film tactile dont une surface est pourvue des signes en reliefs décrits ci-dessus pour identifier les couleurs et leurs nuances. La surface opposée du film peut être pourvue d'une matière adhésive, pour permettre d'apposer le film sur la surface d'un autre objet. La couleur des objets tels que des objets décoratifs, des étiquettes de vêtements, des tubes de peinture, des accessoires vestimentaires ou d'ornement, peut ainsi être facilement identifiée par un aveugle ou un malvoyant. Un tel film peut comprendre par exemple une matière polymère dont le relief est moulé lors de sa conception, ou imprimé par un procédé d'emboutissage. Le film peut être alternativement percé par un emporte-pièce aux endroits caractéristiques. Dans ce cas, le relief du dispositif tactile **1** sera de type concave. La matière polymère peut être du silicone ou une matière plastique rigide ou souple. Toute autre matière permettant la mise en relief des points définis ci-dessus est également viable.

Alternativement, le dispositif tactile **1** peut être conçu par impression additive, également connue sous le terme d'impression 3D, au moyen d'un dispositif d'impression **2.** Le dispositif d'impression **2** comprend notamment un module d'impression **A** et une interface de commande **B,** permettant à un opérateur d'entrer les paramètres d'impression. En particulier, l'interface de commande **B** peut comprendre plusieurs touches ou groupes de touches permettant de sélectionner les points de couleur C, les éventuels points de teinte **T,** les éventuels dégradés, et de combiner les paramètres sélectionnés. Par exemple, un premier groupe de touches **P1** peut permettre la sélection des 6 directions cardinales relatives aux points de couleur **C.** Un second groupe de touche **P2** peut permettre la sélection des 6 directions cardinales relatives aux points de teinte **T.** Un troisième groupe de touche **P3** peut être dédié aux degrés de clarté, et comprendre par exemple les deux positions cardinales relatives aux points de couleur **C** du noir et du blanc, les deux positions cardinales relatives aux degrés clairs et foncés et les deux positions cardinales relatives aux degrés très clairs et très foncés. Des touches relatives aux dégradés ainsi que d'autres touches peuvent être intégrées à l'interface de commande **B.** Les touches de l'interface de commande **B** peuvent être elles-mêmes pourvues des éléments tactiles qu'elles représentent de manière à être reconnue d'un aveugle ou d'un malvoyant.

Selon un mode de réalisation, le module d'impression **A** est un module d'impression additive ou 3D, permettant de produire un dispositif tactile **1** par dépôt de matière. A cet effet, tout système d'impression 3d connu de l'homme de métier peut être utilisé. Le dispositif tactile **1** peut être intégralement conçu par ajout de matière. Alternativement, un support sans relief et aux dimensions de l'étiquette à imprimer peut être disposé dans la zone d'impression 3D de sorte à recevoir la matière nécessaire à créer le relief tactile du dispositif tactile **1** décrit ici. Les quantités de matière déposée et leur localisation sur le support correspondent au motif à imprimer comprenant les points de couleur **C** et les points de teinte **T** le cas échéant et tout autre relief participant à la représentation de la couleur. La matière utilisée pour le support peut être toute matière polymère ou textile adéquate telle qu'une feuille de silicone, de caoutchouc, de PVC ou tout autre polymère synthétique. La surface non imprimée, opposée à la surface du support sur laquelle est déposée la matière d'impression 3D, peut être encollée au préalable et protégée par un film protecteur. Le film protecteur peut être retiré après l'impression des reliefs sur le support, au moment de son collage sur une surface. La matière utilisée pour l'impression 3D peut être toute matière adéquate telle qu'un polymère synthétique ou un mélange de polymères. Les matières comprises dans le support et celles utilisées pour l'impression 3D sont choisies de sorte à adhérer correctement l'une à l'autre lors de l'impression 3D et produire ainsi un dispositif tactile **1.**

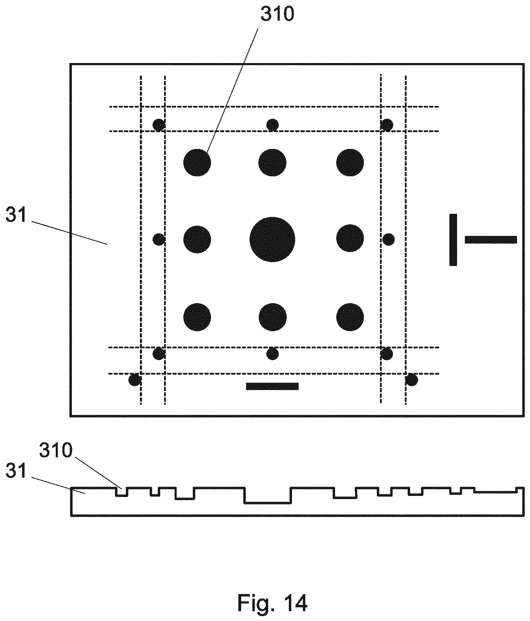

Selon un autre mode de réalisation illustré par les figures 14 à ... L'impression du dispositif tactile **1** est effectuée par emboutissage ou poinçonnage d'un film de matière déformable **5.** Le module d'impression **A** comporte à cet effet un dispositif de mise en relief **3** comprenant au moins une première plaque de poinçonnage **31** dans laquelle sont creusés des évidements **310** dont l'emplacement, la forme géométrique et les dimensions correspondent à l'emplacement, à la forme géométrique et aux dimensions des points de lecture du dispositif tactile 1. Les points de lecture du dispositif tactile **1** s'entendent comme tout relief nécessaire à la détermination de la couleur et incluent en l'occurrence les points de couleur **C,** les points de teinte T, les signes d'orientations **F** et de dégradé **D,** et tout autre élément tactile. La figure 14 montre une telle plaque **31** de face et de profil. La profondeur et le diamètre des évidements **310** est en adéquation avec le relief du dispositif tactile **1** à imprimer. Les évidements **310** de la première plaque de poinçonnage **31** correspondent ainsi à l'ensemble des points de lecture pouvant être imprimés sur le dispositif tactile **1.** Le fond de l'évidement **310,** bien que représenté plat, peut être concave de sorte à produire un point de lecture arrondi. Toute autre forme peut être envisagée. Les évidements **310** sont circulaires et de diamètres variés correspondant aux points de couleurs **C** et de teinte **T.** Les évidements **310** correspondant aux signes d'orientation **F** et de dégradé **D** sont quant à eux de forme rectangulaire ou oblongue. Optionnellement, le fond d'un ou plusieurs évidements **310** peut être texturé de sorte à produire un effet tactile particulier sur les points de lecture du dispositif tactile1. La première plaque de poinçonnage **31** peut être faite en métal ou en polymère dur ou en tout autre matériau dur et de préférence résistant au frottement de sorte à limiter l'usure ou la déformation des évidements **310** et en particulier de leur bord. La première plaque de poinçonnage **31** comporte une surface d'appui **311** plane permettant d'accommoder le film imprimable **5** sur les évidements **310.**

Le module d'impression **A** comporte en outre un ensemble de poinçons mobiles **320** en vis-à-vis de chacun des évidements **310** de la première plaque de poinçonnage **31.** Leur dimension et leur forme est complémentaire de la dimension et de la forme des évidements **310** auxquels ils font face de sorte à pouvoir s'emboiter dans l'évidement **310** correspondant. Les poinçons mobiles **320** sont indépendamment activables. Un ou plusieurs des poinçons **320** peuvent alors être sélectionnés et activés pour s'insérer dans les évidements **310** correspondants. Les poinçons **320** sont sélectionnés au moyen de l'interface de commande **B.** Une fois sélectionnés, une touche spécifique **22** permet de les activer simultanément pour imprimer un dispositif tactile **1.** Les poinçons **320** peuvent être métalliques ou en un autre matériau dur et non déformable tel qu'un polymère en plastique dur. La forme de leur tête est de préférence complémentaire de la forme du fond des évidements **310** auxquels ils correspondent. De préférence, la tête des poinçons 320 est arrondie, de sorte à produire des points de lecture arrondis, plus confortables que des formes anguleuses. La forme arrondie permet en outre d'évider de dégrader le dispositif tactile **1** lors de son impression. En particulier, le poinçonnage du film imprimable **5** résulte en une déformation visant à créer un relief mais ne doit pas conduire à un quelconque percement ou déchirement du film **5.**

Les poinçons **320** peuvent être indépendamment activés par un dispositif d'activation **322** les faisant passer d'une position de retrait, éloignée de l'évidement **310** correspondant et inapte au poinçonnage, à une position active, imbriquée dans l'évidement **310.** Un tel dispositif d'activation **320** peut être un dispositif électrique et comprendre par exemple une bobine et un électro-aimant, ou un dispositif mécanique comprenant un élément de détente tel qu'un ressort, ou tout autre moyen d'activation connu de l'homme de métier. L'actionnement de la touche d'activation **22** de l'interface de commande **B** déclenche le dispositif d'activation **322** correspondant aux poinçons **320** sélectionnés au préalable par l'interface de commande **B.**

L'interface de commande B peut comprendre d'autres touches spécifiques que les touches 21, 22 et 23 mentionnées ici. Elle peut par exemple comprendre une touche permettant de répéter une opération ou l'impression d'un motif. Les touches ou les différents éléments de commande de l'interface de commande peuvent en outre texturée ou comprendre un motif tactile de sorte à pouvoir être utilisée par une personne malvoyante. Elles comportent de préférence, en plus ou alternativement un repère visuel pour être utilisable par une personne voyante ne connaissant pas le formalisme du dispositif tactile **1.**

Les poinçons **320** peuvent optionnellement être inclus dans une seconde plaque de poinçonnage **32,** disposée en vis-à-vis de la première plaque de poinçonnage **31** et dans un plan parallèle à celui de la première plaque de poinçonnage **31.** La seconde plaque de poinçonnage **32** est alors pourvue de trous **323** dans lesquels peuvent coulisser les poinçons **320** et servant de guide pour leur déplacement. Il est entendu que les trous **323** de la seconde plaque de poinçonnage **32** sont orientés perpendiculairement au plan de la seconde plaque de poinçonnage **32.** La seconde plaque de poinçonnage **32** comporte une surface extérieure **321** faisant face à la surface d'appui **311** de la première plaque de poinçonnage **31.**

Le film d'impression **5** peut être disposé sur la surface d'appui **311** de la première plaque d'impression **31** et subir l'action des poinçons **320** sélectionnés de telle sorte qu'il prend la forme des évidements **310** de manière permanente.

Selon un mode de réalisation, seuls les poinçons **320** sont mobiles et sont activés depuis leur position de retrait jusqu'à leur position de poinçonnage, imbriquée dans l'évidement **310** correspondant. Selon un autre mode de réalisation, la seconde plaque de poinçonnage **32** est mobile de sorte à se rapprocher de la première plaque de poinçonnage **31** pour plaquer le film imprimable **5** contre la surface d'appui **311** et la surface extérieure **321** de la seconde plaque de poinçonnage, avant que les poinçons **320** ne s'activent. Selon un autre mode de réalisation, les poinçons **320** sélectionnés sont activés depuis une position de retrait jusqu'à une position de poinçonnage où ils sont saillants de la surface extérieure **321** de la seconde plaque **32,** alors éloignée du film imprimable **5.** La seconde plaque de poinçonnage **32** est alors appliquée contre la première plaque de poinçonnage **31** de sorte à faire pénétrer les poinçons activés saillant de sa surface extérieure **321** dans les évidements **310** correspondants et ainsi imprimer le film imprimable **5.**

Le film imprimable **5** peut être constitué de tout matériau déformable et apte à maintenir le relief imprimé. Il peut comprendre par exemple un film métallique, ou un polymère dur tel que du PVC ou d'autres polymères ou un mélange de plusieurs couches de matériaux. Le film imprimable **5** peut comporter plusieurs couches superposées, incluant une couche d'encollage et une pellicule de protection pouvant être retirée au moment de placer le dispositif tactile **1** sur une surface. Les dimensions du film imprimable 5 peuvent correspondre aux dimensions du dispositif tactile 1 ou être plus grande que celles du dispositif tactile **1.**

Selon un mode de réalisation, le film imprimable **5** est sous forme d'un ruban dont la largeur correspond à la largeur du dispositif tactile **1** ou est légèrement plus large que le dispositif tactile **1.** La bande peut être imprimée avec plusieurs dispositifs tactiles **1** dans sa longueur. Le module d'impression A peut comporter un système de découpe **6** permettant de découper une portion imprimée de la bande. Le système de découpe peut être activé par une touche spécifique **23** de découpe de l'interface de commande **B.** Le dispositif de découpe **6** est de préférence juxtaposé au dispositif de mise en relief **3.** Il peut néanmoins être intégré partiellement ou totalement à l'une des première **31** ou seconde **32** plaques de poinçonnage. Le système de découpe **6** comporte une lame de découpe **61** mobile de sorte à cisailler la bande. Il permet de dissocier le dispositif tactile **1** du reste de la bande une fois imprimé. Le module d'impression A peut en outre comporter un dispositif d'entrainement **7** de la bande pas à pas activable par une touche spécifique d'entrainement **21.** Le dispositif d'entrainement **7** peut être disposé en amont du dispositif de mise en relief **3.**

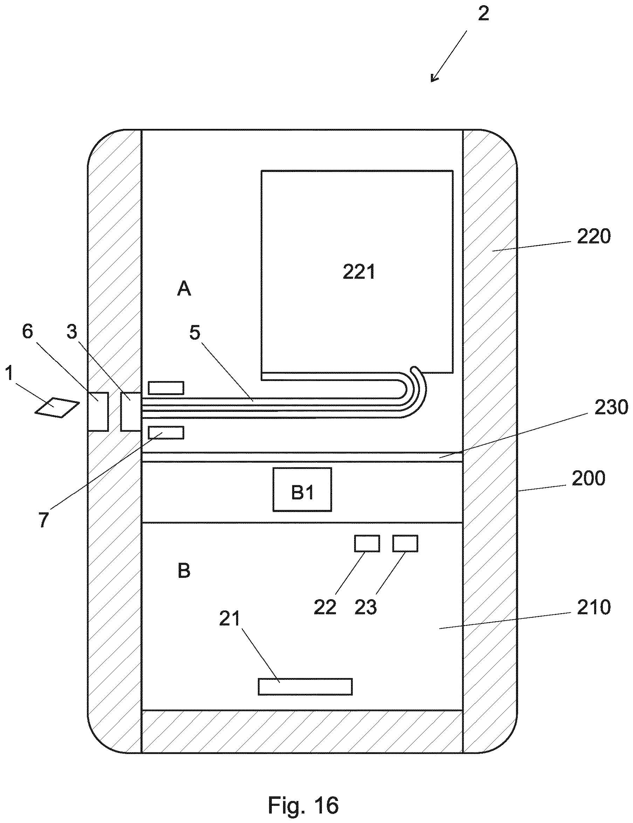

Un exemple de dispositif d'impression **2** est représenté à la figure 16. Il peut comprendre un boitier **200,** pouvant être divisé en deux compartiments **210** et **220,** l'interface de commande B peut être disposée dans l'un des deux compartiments **210** et le module d'impression A dans l'autre compartiment **220.** Le compartiment comportant l'interface de commande B peut en outre comprendre un écran **B1.** Le compartiment **220** comportant le module d'impression A peut comprendre un dévidoir **221** permettant de stocker la bande de film à imprimer **5.** Le dispositif d'impression **2** comporte un dispositif d'entrainement **7** de la bande, permettant de dérouler la bande depuis le dévidoir **221.** Il comporte le dispositif de mise en relief **3** et le système de coupe **6,** disposé à proximité de l'un des bords du boitier **200.**

Le dispositif tactile 1, s'il prend la forme d'un film, peut être transparent de manière à rester discret et éviter tout désagrément esthétique relatif à l'objet sur lequel il est apposé. Il peut alternativement être coloré. Le film peut être par exemple coloré de la teinte qu'il représente, notamment pour pouvoir être identifié en tant que tel par un opérateur avant d'être apposé sur un objet de même teinte, ou à des fins d'enseignement le cas échéant. Dans ce dernier cas, l'enseignant, voyant, est en mesure d'identifier la couleur que représente le dispositif tactile **1** qu'il soumet à son élève.

Alternativement, la surface d'un objet peut être directement marquée selon les caractéristiques du dispositif tactile **1** décrites ci-dessus. Des objets en matière polymère, étant obtenus par moulage par exemple, peuvent ainsi être caractérisés lors de leur conception, en aménageant dans le moule correspondant le relief du dispositif tactile **1** adéquat. La couleur d'objets tels que des stylos ou des jouets peut être ainsi facilement identifiable au toucher.

Des bouteilles en verre peuvent également faire l'objet d'un tel marquage, notamment pour en faciliter le recyclage qui parfois tient compte de la couleur du verre. Les containers destinés à recueillir le verre sont avantageusement marqués de la même manière.

Le dispositif tactile **1** permet de pouvoir faire connaître les couleurs d'un objet à un aveugle ou un malvoyant, y compris pour les objets artistiques tels que des tableaux ou dessins, où chaque zone de couleur est identifiée par le dispositif tactile **1** correspondant. Des fresques tactiles destinées aux aveugles et aux malvoyants peuvent ainsi être conçues.

La liste d'objets n'est pas exhaustive et ne mentionne que quelques exemples. Il est cependant explicite que la présente invention couvre tout objet comportant le dispositif tactile **1.**

### Numéros de référence employés sur les figures

- 1: Dispositif tactile
- 2: Dispositif d'impression
- 200: Boitier
- 210, 220: compartiments
- 221: Dévidoir

- 3: Dispositif de mise en relief
- 31: Première plaque de poinçonnage
- 310: Evidements
- 311: Surface d'appui
- 32: Seconde plaque de poinçonnage
- 320: Poinçons
- 321: Surface extérieure
- 322: Dispositif d'activation
- 5: Film imprimable
- 6: Système de découpe
- 7: Dispositif d'entrainement
- A: module d'impression
- B: Interface de commande
- B1: Ecran
- F: Signe d'orientation
- P1, P2, P3: Groupes de touches
- Z1: Première zone tactile
- Z2: Seconde zone tactile
- C: Point de couleur
- R: Point de référence
- T: Point de teinte
- D: Signe de dégradé
- dR: Diamètre du point de référence
- dC: Diamètre du point de couleur
- dT: Diamètre du point de teinte
- V: Entre-axe d'un point de couleur et du point de référence

## Revendications

1. Dispositif tactile (1) pour la représentation d'une couleur, comprenant un signe d'orientation (F) et une première zone tactile (Z1) comprenant un point central de référence (R) en relief, et au moins un point de couleur (C), également en relief, disposé selon une position cardinale par rapport au point de référence (R), **caractérisé en ce que** la position cardinale du au moins un point de couleur (C) est caractéristique de la couleur représentée.

2. Dispositif selon la revendication 1, **caractérisé en ce que** les positions cardinales sont au nombre de 8, définissant chacune une couleur ainsi que le blanc et le noir.

3. Dispositif selon les revendications 1 ou 2, **caractérisé en ce que** deux ou plus des couleurs représentées par l'une des positions cardinales peuvent être combinées de manière à représenter d'autres couleurs.

4. Dispositif selon l'une ou l'autre des revendications précédentes, **caractérisé en ce que** le point de référence (R) est deux fois plus grand que le au moins un point de couleur (C).

5. Dispositif selon l'une ou l'autre des revendications précédentes, **caractérisé en ce que** la première zone tactile (Z1) est déterminée par le point de référence (R) et l'ensemble des points de couleur (C).

6. Dispositif selon l'une ou l'autre des revendications précédentes, **caractérisé en ce qu'**il comprend en outre une seconde zone tactile (Z2), périphérique à la première zone tactile (Z1), où peuvent être disposés un ou plusieurs points de teinte (T) selon les directions cardinales par rapport au point de référence (R), où la position cardinale dudit un ou plusieurs point de teinte (T) est caractéristique du degré de clarté, ou du ton de la couleur dans le cas d'une combinaison de couleurs.

7. Dispositif selon la revendication précédente, **caractérisé en ce que** les points de teinte (T) sont deux fois plus petits que les points de couleurs (C).

8. Dispositif selon l'une ou l'autre des revendications précédentes, **caractérisé en ce qu'**il comporte en outre un signe distinctif (D) permettant d'identifier les éventuels dégradés de couleur, ainsi que leur direction.

9. Objet comprenant un ou plusieurs dispositifs tactiles selon l'une ou l'autre des revendications 1 à 8, de sorte que sa couleur puisse être identifiée par un aveugle ou un malvoyant.

10. Dispositif d'impression permettant de produire un dispositif tactile selon l'une ou l'autre des revendications 1 à 7, **caractérisé en ce qu'**il comporte un module d'impression (A) et une interface de commande (B), où l'interface de commande (B) comporte un groupe (P1) de 8 touches identifiant les 8 positions cardinales caractérisant les points de couleurs (C).

11. Dispositif d'impression selon la revendication 10, **caractérisé en ce que** le module d'impression (A) est un module d'impression 3D.

12. Dispositif d'impression selon la revendication 10, **caractérisé en ce que** le module d'impression comporte un dispositif de mise en relief (3) comprenant au moins une première plaque de poinçonnage (31) comprenant des évidements (310) dont la position, la géométrie et la profondeur correspondent aux reliefs du dispositif tactile (1) à imprimer et un jeu de poinçons (320) disposés en vis-à-vis des évidements (310).

13. Dispositif d'impression selon les revendications 10 ou 12, **caractérisé en ce que** plusieurs poinçons peuvent être présélectionnés par l'interface de commande (B) puis activés simultanément au moyen d'une touche d'activation (22).

14. Dispositif d'impression selon l'une des revendications 10 et 12 à 13, **caractérisé en ce qu'**il comprend en outre un dévidoir (221) comportant une bande de film imprimable (5), un dispositif d'entrainement (7) pas à pas et un dispositif de découpe (6).

15. Dispositif d'impression selon l'une des revendications 10 et 12 à 14, **caractérisé en ce que** le film imprimable (5) comprend une matière déformable non élastique de sorte à conserver le relief obtenus par les poinçons (320).

## Patentansprüche

1. Taktile Vorrichtung (1) zur Darstellung einer Farbe, umfassend ein Orientierungszeichen (F) und einen ersten taktilen Bereich (Z1), der einen zentralen reliefartigen Referenzpunkt (R) und mindestens einen Farbpunkt (C), der ebenfalls reliefartig ist und der in einer kardinalen Position in Bezug auf den Referenzpunkt (R) angeordnet ist, **dadurch gekennzeichnet, dass** die kardinale Position des mindestens einen Farbpunkts (C) für die dargestellte Farbe charakteristisch ist.

2. Vorrichtung nach Anspruch 1, **dadurch gekennzeichnet, dass** die Anzahl der Kardinalpositionen acht ist, wobei jede der Kardinalpositionen enweder eine Farbe oder Weiß oder Schwarz definiert.

3. Vorrichtung nach Anspruch 1 oder 2, **dadurch gekennzeichnet, dass** zwei oder mehr der Farben, die durch eine der Kardinalpositionen repräsentiert werden, kombiniert werden können, um andere Farben zu repräsentieren.

4. Vorrichtung nach einem der vorhergehenden Ansprüche, **dadurch gekennzeichnet, dass** der Referenzpunkt (R) doppelt so groß ist wie der mindestens eine Farbpunkt (C).

5. Vorrichtung nach einem der vorhergehenden Ansprüche, **dadurch gekennzeichnet, dass** der erste Berührungsbereich (Z1) durch den Referenzpunkt (R) und die Gesamtheit der Farbpunkte (C) bestimmt wird.

6. Vorrichtung nach einem der vorhergehenden Ansprüche, **dadurch gekennzeichnet, dass** sie weiters einen zweiten taktilen Bereich (Z2) umfasst, der peripher zum ersten taktilen Bereich (Z1) angeordnet ist, in dem ein oder mehrere Tönungspunkte (T) gemäß den Kardinalrichtungen in Bezug auf den Referenzpunkt (R) angeordnet werden können, wobei die Kardinalposition des einen oder der mehreren Tönungspunkte (T) für den Helligkeitsgrad oder den Farbton im Fall einer Farbkombination charakteristisch ist.

7. Vorrichtung nach dem vorhergehenden Anspruch, **dadurch gekennzeichnet, dass** die Farbtonpunkte (T) halb so groß sind wie die Farbpunkte (C).

8. Vorrichtung nach einem der vorhergehenden Ansprüche, **dadurch gekennzeichnet, dass** sie außerdem ein Unterscheidungsmerkmal (D) aufweist, mit dem eventuelle Farbabstufungen sowie deren Richtung identifiziert werden können.

9. Gegenstand mit einer oder mehreren taktilen Vorrichtungen nach einem der Ansprüche 1 bis 8, so dass seine Farbe von einem Blinden oder Sehbehinderten erkannt werden kann.

10. Druckvorrichtung, mit der eine taktile Vorrichtung nach einem der Ansprüche 1 bis 7 hergestellt werden kann, **dadurch gekennzeichnet, dass** sie ein Druckmodul (A) und eine Steuerschnittstelle (B) umfasst, wobei die Steuerschnittstelle (B) eine Gruppe (P1) von 8 Tasten umfasst, die die 8 Kardinalpositionen identifizieren, welche die Farbpunkte (C) kennzeichnen.

11. Druckvorrichtung nach Anspruch 10, **dadurch gekennzeichnet, dass** das Druckmodul (A) ein 3D-Druckmodul ist.

12. Druckvorrichtung nach Anspruch 10, **dadurch gekennzeichnet, dass** das Druckmodul eine Reliefierungsvorrichtung (3) umfasst, die mindestens eine erste Stanzplatte (31) mit Aussparungen (310), deren Position, Geometrie und Tiefe den Reliefs der zu bedruckenden taktilen Vorrichtung (1) entsprechen, und einen Satz von Stanzstempeln (320), die gegenüber den Aussparungen (310) angeordnet sind, aufweist.

13. Druckvorrichtung nach Anspruch 10 oder 12, **dadurch gekennzeichnet, dass** mehrere Stanzstempel von der Steuerschnittstelle (B) vorgewählt und dann mittels einer Aktivierungstaste (22) gleichzeitig aktiviert werden können.

14. Druckvorrichtung nach einem der Ansprüche 10 und 12 bis 13, **dadurch gekennzeichnet, dass** sie außerdem eine Abwickelvorrichtung (221) mit einer bedruckbaren Folienbahn (5), einem Schrittantrieb (7) und einer Schneidevorrichtung (6) umfasst.

15. Druckvorrichtung nach einem der Ansprüche 10 und 12 bis 14, **dadurch gekennzeichnet, dass** die bedruckbare Folie (5) ein verformbares, nicht-elastisches Material umfasst, so dass das von den Stempeln (320) erhaltene Relief erhalten bleibt.

## Claims

1. Tactile device (1) for representing a color, comprising an orientation sign (F) and a first tactile area (Z1) comprising a raised central reference point (R) and at least one raised color point (C) arranged in a cardinal position in relation to the reference point (R), **characterized in that** the cardinal position of the at least one color point (C) is characteristic of the color represented.

2. Device according to claim 1, **characterized in that** there are 8 cardinal points, each defining a color as well as black and white.

3. Device according to claims 1 or 2, **characterized in that** two or more of the colors represented by one of the cardinal positions can be combined in such a way as to represent other colors.

4. Device according to any one of the preceding claims, **characterized in that** the reference point (R) is twice as large as the at least one color point (C).

5. Device according to any one of the preceding claims, **characterized in that** the first tactile area (Z1) is determined by the reference point (R) and all of the color points (C).

6. Device according to any one of the preceding claims, **characterized in that** it further comprises a second tactile area (Z2), peripheral to the first tactile area (Z1), where one or more shade points (T) can be arranged according to the cardinal directions with respect to the reference point (R), where the cardinal position of said one or more shade points (T) is characteristic of the degree of lightness, or of the color tone in the case of a color combination.

7. Device according to the preceding claim, **characterized in that** the shade points (T) are half the size of the color points (C).

8. System according to any one of the preceding claims, **characterized in that** it also includes a distinctive sign (D) making it possible to identify any color gradients, as well as their direction.

9. An object comprising one or more tactile devices according to any one of claims 1 to 8, such that its color can be identified by a blind or visually impaired person.

10. Printing device for producing a tactile device according to any one of claims 1 to 7, **characterized in that** it comprises a printing module (A) and a command interface (B), where the command interface (B) comprises a group (P1) of 8 keys identifying the 8 cardinal positions characterizing the color points (C).

11. Printing device according to claim 10, **characterized in that** the printing module (A) is a 3D printing module.

12. Printing device according to claim 10, **characterized in that** the printing module includes a shaping device (3) comprising at least a first punching plate (31) including recesses (310) whose position, geometry and depth correspond to the reliefs of the tactile device (1) to be printed and a set of punches (320) arranged opposite the recesses (310).

13. Printing device according to claims 10 or 12, **characterized in that** several punches can be preselected by the command interface (B) and then activated simultaneously by means of an activation key (22)

14. Printing device according to one of claims 10 and 12 to 13, **characterized in that** it further comprises a reel (221) comprising a strip of printable film (5), a step-by-step driving device (7) and a cutting device (6).

15. Printing device according to one of claims 10 and 12 to 14, **characterized in that** the printable film (5) comprises a non-elastic deformable material so as to retain the relief obtained by the punches (320).
